# FASCICULE DE BREVET EUROPEEN

(11) **EP 1 466 102 B1**
(45) Date de publication et mention de la délivrance du brevet: **11.01.2006**
(21) Numéro de dépôt: 03715015.8
(22) Date de dépôt: 16.01.2003
(51) Int. Cl.: F16C 19/06

(54) **PALIER A ROULEMENT RIGIDE A BILLES**
STARRES KUGELLAGER
RIGID BALL BEARING

(30) Priorité: 18.01.2002 FR 0200642
(43) Date de publication de la demande: 13.10.2004
(73) Titulaire: Aktiebolaget SKF, 415 50 Göteborg (SE)
(72) Inventeur: PARADIS, Marc, F-91540 Echarcon (FR); Constant, Bruno, F-37000 Tours (FR)
(74) Mandataire: Casalonga, Axel
(86) Numéro de dépôt international: PCT/FR2003/000135
(87) Numéro de publication internationale: WO 2003/062655

(56) Documents cités:
- DE-C- 203 157
- FR-A- 2 792 378
- PATENT ABSTRACTS OF JAPAN vol. 1996, no. 06, 28 juin 1996 (1996-06-28) & JP 08 042577 A (KOYO SEIKO CO LTD), 13 février 1996 (1996-02-13)
- PATENT ABSTRACTS OF JAPAN vol. 018, no. 210 (E-1537), 14 avril 1994 (1994-04-14) & JP 06 006949 A (NEC IBARAKI LTD), 14 janvier 1994 (1994-01-14)

## Description

L'invention concerne le domaine des paliers à roulements dits "rigides" à une rangée de billes.

De tels roulements comportent une bague extérieure pourvue d'un chemin de roulement toroïdal sur son alésage, une bague intérieure pourvue d'un chemin de roulement toroïdal sur sa surface externe, une rangée de billes disposées entre les deux chemins de roulement, au contact desdits chemins, le profil des chemins de roulement étant symétrique par rapport à un plan passant par lé centre des billes, une cage se présentant sous la forme d'un élément annulaire muni d'un certain nombre d'alvéoles destinées à recevoir les billes et à les espacer convenablement dans le sens circonférentiel les unes par rapport aux autres pour éviter tout balourd lors de la rotation du roulement, et éventuellement des organes d'étanchéité sous la forme de joints ou de flasques disposés d'un ou des deux côtés du roulement afin de prévenir toute entrée d'éléments polluants en provenance de l'extérieur et d'empêcher toute fuite de lubrifiant vers l'extérieur du roulement. Le rayon du profil des chemins de roulement est très légèrement supérieur au rayon des billes utilisées afin que le contact entre billes et chemins de roulement soit aussi réduit que possible et se fasse en un point.

De tels roulements sont connus (FR-A-2 792 378) et utilisés dans de multiples applications.

En vue de faciliter l'approvisionnement et l'interchangeabilité de ces roulements d'un fabricant à l'autre, les cotes relatives aux paramètres définissant l'encombrement et le montage de ces roulements ont été standardisées pour donner des séries de roulements dites "ISO".

Ces séries font appel à des désignations de base utilisant 3, 4 ou 5 chiffres (exemples 608, 6204, 61964) communes à tous les fabricants de roulements, à chaque désignation de base correspondant des cotes nominales d'encombrement (D = Diamètre extérieur, d = alésage et B = largeur) identiques chez tous les constructeurs.

L'utilisateur peut ainsi disposer de gammes standards de roulements, ce qui facilite son choix et assure l'interchangeabilité des roulements.

L'invention concerne plus particulièrement des roulements rigides à billes destinés à des applications, notamment dans l'industrie du papier (« spreader rolls »), dans lesquelles le roulement est soumis aux contraintes suivantes :
- charge relativement faible eu égard à la capacité du roulement,
- vitesse de rotation élevée,
- dévers important entre les deux bagues (le dévers étant l'angle que fait l'axe de révolution de la bague intérieure par rapport à l'axe de révolution de la bague extérieure - Le dévers est dû à un couple exercé dans un plan passant par l'axe de rotation du roulement),
- milieu relativement salissant (poussières, particules de papier).

Le cahier des charges pour cette application exige en outre que le roulement puisse fonctionner avec un couple de rotation (ou couple de traînée) très faible.

Le fonctionnement des roulements sous charge faible et vitesse élevée conduit à des glissements internes entre les éléments roulants et les chemins de roulement des bagues, ce qui génère un couple de fonctionnement relativement important néfaste à la consommation d'énergie et favorise la dégradation des surfaces de contact pouvant conduire à des écaillages et à la dégradation rapide du roulement.

Le fonctionnement du roulement avec un dévers important introduit des contraintes anormalement élevées au niveau du contact billes/cage.

Le fonctionnement en milieu polluant riche en poussières ou particules de papier favorise également la défaillance des roulements.

Les roulements conventionnels utilisés jusqu'alors dans ce type d'application s'accommodent mal de telles contraintes et ont une durée de service relativement courte. Le changement fréquent de ces roulements conduit à des frais de pièces de rechange et surtout d'immobilisation de machine prohibitifs, compte tenu du coût très élevé d'une machine à papier.

Un des objets de l'invention est de proposer une nouvelle gamme de roulements mieux adaptés à ces applications, présentant des dimensions d'encombrement identiques à celles des roulements conventionnels, avec des caractéristiques internes de construction permettant de garantir une durée de service élevée grâce à une excellente adaptation aux contraintes.

Le dispositif de palier à roulement, selon l'invention, est du type comprenant une bague extérieure pourvue d'une surface extérieure et d'un alésage sur lequel est formé un chemin de roulement intérieur toroïdal, une bague intérieure pourvue d'un alésage et d'une surface extérieure cylindrique sur laquelle est formée un chemin de roulement extérieur toroïdal, une rangée de billes disposée entre les deux chemins de roulement, et une cage apte à maintenir un espacement circonférentiel régulier entre les billes. Le diamètre des billes est égal au produit de la demi-différence entre le diamètre extérieur D de la bague extérieure et le diamètre de l'alésage d de la bague intérieure par un coefficient K compris entre 0,45 et 0,5 limites comprises.

En d'autres termes, par rapport aux roulements conventionnels, le diamètre des billes est réduit, les épaisseurs radiales des bagues extérieure et/ou intérieure sont accrues au niveau du fond du chemin de roulement.

Avantageusement, le nombre Z de billes est égal à l'entier le plus proche du rapport entre le produit du diamètre moyen Dₘ par Π sur le produit du diamètre D_{w} des billes par un coefficient K1 compris entre 2,3 et 2,4 limites comprises.

Avantageusement, le nombre Z de billes est égal à l'entier inférieur impair le plus proche du rapport entre le produit du diamètre moyen Dₘ par Π sur le produit du diamètre D_{w} des billes par un coefficient K1 compris entre 2,3 et 2,4 limites comprises.

Le nombre de billes est réduit par rapport à un roulement conventionnel, d'où une réduction du coût du roulement, et une réduction des inerties, des effets gyroscopiques et des forces centrifuges.

Avantageusement, le rapport entre le rayon Rₑ du chemin de roulement de la bague extérieure en section droite et le diamètre D_{w} des billes est compris entre 0,51 et 0,55 limites comprises.

Avantageusement, le rapport entre le rayon Rᵢ du chemin de roulement de la bague intérieure en section droite et le diamètre D_{w} des billes est compris entre 0,51 et 0,55 limites comprises.

Le rayon Rₑ et/ou Rᵢ supérieur au rayon des billes autorise un croisement des axes de rotation des bagues extérieure et intérieure ce qui intéressant en cas de dévers important.

Avantageusement, la cage comprend deux parties annulaires assemblées par rivets et forme des alvéoles pour loger les billes, au moins deux rivets étant prévus entre deux alvéoles consécutifs. On accroît ainsi la rigidité de la cage dans le sens axial, tout en conservant une certaine flexibilité radiale lui permettant de s'adapter aux contraintes résultant des fluctuations de charge.

Dans un mode de réalisation de l'invention, chaque alvéole reçoit une bille.

Dans un mode de réalisation de l'invention, une des billes est réalisée en céramique. Ladite bille en céramique est apte à écraser d'éventuelles particules polluantes sur les chemins de roulement.

De préférence, les valeurs de diamètre extérieur du roulement, de diamètre intérieur du roulement, et de largeur du roulement sont identiques à celles d'un roulement rigide à une rangée de billes conventionnel.

Grâce à l'invention, dans certaines applications pour lesquelles on utilisait des roulements conventionnels à faible durée de service, on pourra utiliser des roulements tolérant mieux le dévers et dont la durée de service sera supérieure, d'où un augmentation du taux d'utilisation de la machine munie de tels roulements.

Les zones de contact entre les billes et les chemins de roulement sont réduites, ce qui diminue le couple de rotation et donc l'échauffement interne du roulement et sa consommation d'énergie.

Les roulements suivant l'invention peuvent être parfaitement interchangeables avec les roulements conventionnels de la gamme ISO et procurent un grand nombre d'avantages.

La présente invention sera mieux comprise et d'autres avantages apparaîtront à la lecture de la description détaillée d'un mode de réalisation pris à titre d'exemple nullement limitatif et illustré par les dessins annexés, sur lesquels :
- la figure 1 est une vue schématique d'une partie d'une machine à papier;
- la figure 2 est une vue de face en élévation d'un rouleau de la machine de la figure 1;
- la figure 3 est une vue du rouleau de la figure 2 en fonctionnement ;
- la figure 4 est une vue en coupe axiale d'un roulement selon un aspect de l'invention ;
- la figure 5 est une vue en coupe axiale de la bague extérieure du roulement de la figure 4 ;
- la figure 6 est une vue en coupe axiale de la bague intérieure du roulement de la figure 4 ; et

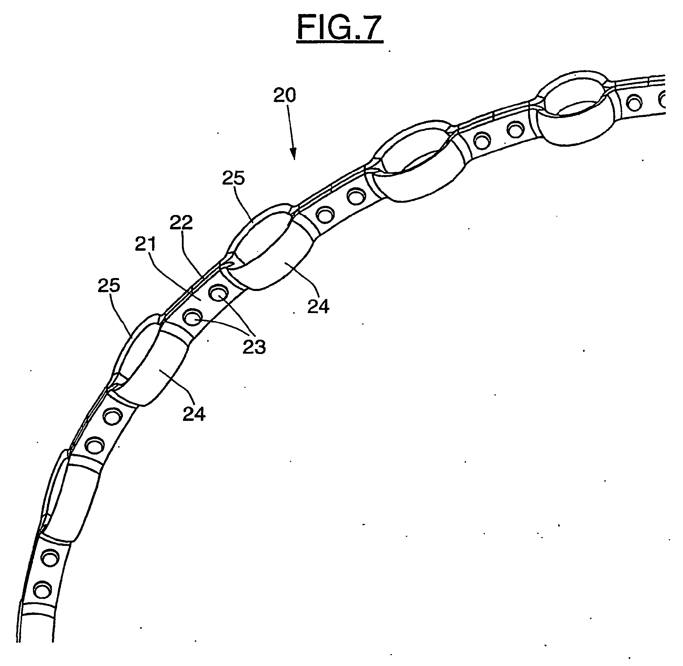

- la figure 7 est une vue en perspective de la cage du roulement de la figure 4.

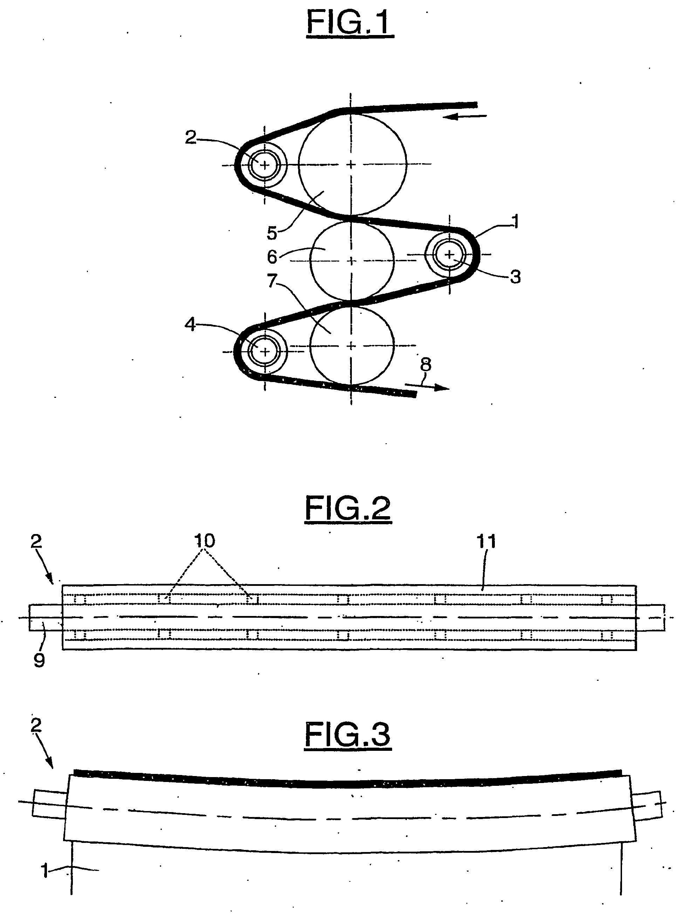

Dans une machine à papier, telle qu'illustrée très schématiquement sur la figure 1, une bande de papier 1 passe par des rouleaux d'étirage référencés 2, 3 et 4, et entre des rouleaux de calandrage référencés 5, 6 et 7. Les axes des rouleaux d'étirage et de calandrage sont parallèles les uns aux autres. Plus précisément, les axes des rouleaux de calandrage 5, 6 et 7 sont disposés dans un même plan, ici un plan vertical, et espacés de façon telle que la bande de papier 1 puisse passer entre les rouleaux 5 et 6, puis entre les rouleaux 6 et 7, qui exercent sur ladite bande de papier un certain effort radial. L'axe du rouleau d'étirage 2 est disposé dans le même plan horizontal que l'axe du rouleau de calandrage 5.

Les rouleaux d'étirage 2 et 4 sont disposés du même côté dudit plan vertical par lequel passent les axes des rouleaux de calandrage 5 à 7, tandis que le rouleau d'étirage 3 est disposé du côté opposé. Ainsi, une bande de papier se déplaçant dans le sens de la flèche 8 vient tout d'abord en contact avec le rouleau de calandrage 5, puisse passe par le rouleau d'étirage 2, puis passe entre les rouleaux de calandrage 5 et 6, puis passe par le rouleau d'étirage 3, puis passe entre les rouleaux de calandrage 6 et 7, puis passe par le rouleau d'étirage 4, puis par le rouleau de calandrage 7.

Sur la figure 2, est représentée de façon très schématique la structure d'un rouleau d'étirage tel que le rouleau 2 de la figure 1. Le rouleau 2 comprend un axe non tournant 9, sur lequel sont montés une pluralité de roulements 10 qui seront généralement répartis de façon régulière le long de l'axe 9, et une pièce cylindrique 11 de révolution, creuse, composée d'un certain nombre de tronçons de diamètres extérieurs identiques mis bout à bout, la pièce cylindrique 11 étant supportée par les roulements 10 et offrant une surface extérieure cylindrique pour le passage de la bande de papier. Or, la longueur de ladite pièce cylindrique 11 est aujourd'hui supérieure à 10 mètres, de l'ordre de 12 mètres, et ce pour produire des bandes de papier de largeur correspondante. Il en découle qu'en charge le rouleau 2 tend à se déformer et à prendre la forme illustrée sur la figure 3, où la courbure a été volontairement exagérée pour la rendre mieux visible. La flexion du rouleau 2 se traduit par une mise en dévers des roulements 10, c'est-à-dire une séparation avec croisement de l'axe de la bague intérieure du roulement et de l'axe de la bague extérieure du même roulement. Un fonctionnement en dévers introduit des contraintes très élevées au niveau du contact entre les billes du roulement et la cage. Il existe un risque d'usure accéléré de la cage et de défauts de fonctionnement.

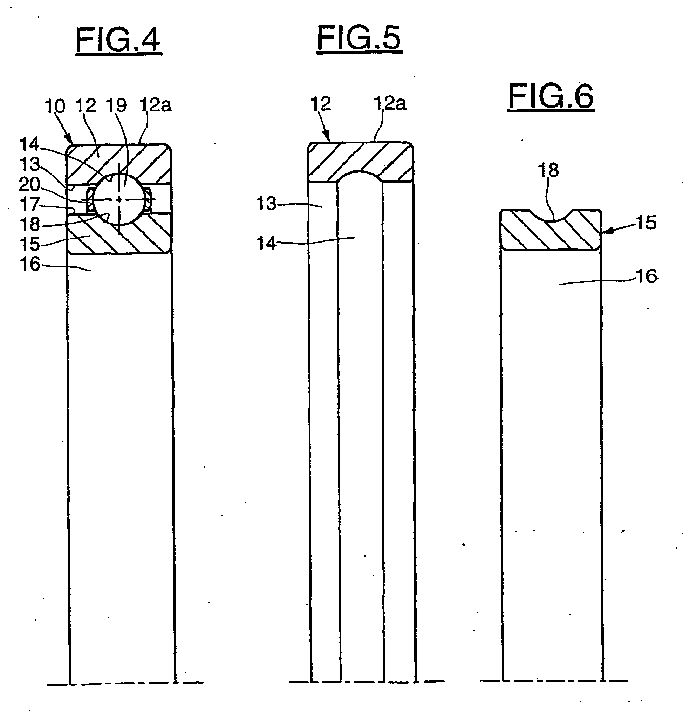

Comme on peut le voir sur la figure 4, un roulement 10 rigide à une rangée de billes comprend une bague extérieure 12 pourvue d'une surface extérieure cylindrique 12a et d'un alésage 13 sur lequel est formé un chemin de roulement toroïdal 14, une bague intérieure 15 pourvue d'un alésage 16 et d'une surface extérieure cylindrique 17 sur laquelle est formé un chemin de roulement toroïdal 18, une rangée de billes 19 disposées entre les chemins de roulement 14 et 18, et une cage 20 de maintien de l'espacement circonférentiel régulier des billes 19.

La cage 20 est réalisée en tôle emboutie. Les billes 19 sont de diamètre réduit par rapport aux billes d'un roulement conventionnel.

Des essais menés par la demanderesse ont abouti à définir pour ces roulements des règles particulières de dimensionnement de certains éléments.

Ainsi, on s'est aperçu qu'il était particulièrement avantageux de prévoir des billes d'un diamètre D_{w} déterminé en fonction du diamètre extérieur D de la bague extérieure et du diamètre de l'alésage d de la bague intérieure par la formule suivante : D_{w} = (D-d) x K/2 avec K ≥ 0,45 et ≤ 0,5.

La détermination du nombre Z de billes que l'on monte dans le roulement est effectuée en fonction du diamètre moyen Dₘ du roulement, c'est-à-dire le diamètre du cercle fictif passant par le centre des éléments roulants et du diamètre D_{w} des billes. On prend Z = à l'entier le plus proche de : Dₘ x Π/(D_{w} x K1) avec K1 ≥ 2,3 et ≤ 2,4. Plus particulièrement, on préfèrera choisir Z comme étant l'entier impair inférieur le plus proche du rapport précité.

Pour permettre un certain dévers du roulement, c'est-à-dire un certain angle entre l'axe de la bague intérieure et l'axe de la bague extérieure, on prévoit que le rayon Rₑ du chemin de roulement de la bague extérieure en section droite soit légèrement supérieur au rayon des billes avec la relation suivante entre ces deux éléments : Rₑ/D_{w} ≥ 0,51 et ≤ 0,55. Le rayon Rᵢ du chemin de roulement de la bague intérieure en section droite sera choisi dans les mêmes limites : Rᵢ/D_{w} ≥ 0,51 et ≤ 0,55.

La cage 20 comprend deux demi-cages identiques 21 et 22 de forme générale annulaire et assemblées par des rivets 23. Chaque demi-cage 21, 22 comprend une pluralité de demi-alvéoles 24, 25 circonférentiellement régulièrement espacés et susceptibles de venir les unes en face des autres lors de l'assemblage des deux demi-cages 21 et 22. Le nombre Z de billes du roulement, conforme à l'invention, étant relativement plus faible que celui d'un roulement classique, tel que défini par la norme ISO, par exemple, le nombre d'alvéoles de la cage 20 est réduit dans les mêmes proportions de façon que chaque alvéole soit occupé par une bille. Il subsiste alors un espace circonférentiel non négligeable entre deux alvéoles, dans lequel sont aménagés des trous destinés à recevoir les rivets 23. Pour éviter une déformation possible des deux demi-cages, en raison de l'espacement important des rivets dû à l'espacement important des alvéoles, on monte au moins deux rivets 23 entre chaque alvéole. Cette conception permet d'assurer une meilleure liaison axiale des deux demi-cages, compte tenu des efforts exercés par les billes sur les alvéoles. Chaque rivet peut ainsi être disposé à la distance adéquate de l'alvéole le plus proche. On obtient de cette façon une cage présentant une flexibilité radiale suffisante pour s'adapter aux fluctuations de charges tout en conservant une rigidité axiale importante pour résister aux efforts de séparation des deux demi-cages.

Enfin, dans un environnement où des poussières ou des particules de papier sont susceptibles de venir polluer la zone des billes et des chemins de roulement, on prévoit que l'une des billes 20 est réalisée en céramique, tandis que les autres sont réalisées de façon classique en acier, par exemple en acier de nuance 100C6. La bille en céramique présentant une très grande dureté, est capable d'écraser d'éventuelles particules et d'éviter un endommagement des billes en acier susceptible de conduire à un écaillage de fatigue.

## Revendications

1. Dispositif de palier à roulement rigide à une rangée de billes, comprenant une bague extérieure (11) pourvue d'une surface extérieure et d'un alésage sur lequel est formé un chemin de roulement intérieur toroïdal (14), une bague intérieure (15) pourvue d'un alésage et d'une surface extérieure cylindrique sur laquelle est formée un chemin de roulement extérieur toroïdal (18), une rangée de billes (19) disposée entre les deux chemins de roulement, et une cage apte à maintenir un espacement circonférentiel régulier entre les billes, **caractérisé par le fait que** le diamètre des billes. D_{w} est égal au produit de la demi-différence entre le diamètre extérieur D de la bague extérieure et le diamètre de l'alésage d de la bague intérieure par un coefficient K compris entre 0,45 et 0,5 limites comprises.

2. Dispositif selon la revendication 1, **caractérisé par le fait que** le nombre Z de billes est égal à l'entier le plus proche du rapport entre le produit du diamètre moyen Dₘ par Π sur le produit du diamètre D_{w} des billes par un coefficient K1 compris entre 2,3 et 2,4 limites comprises.

3. Dispositif selon la revendication 1, **caractérisé par le fait que** le nombre Z de billes est égal à l'entier impair inférieur le plus proche du rapport entre le produit du diamètre moyen Dₘ par Π sur le produit du diamètre D_{w} des billes par un coefficient K1 compris entre 2,3 et 2,4 limites comprises.

4. Dispositif selon l'une quelconque des revendications précédentes, **caractérisé par le fait que** le rapport entre le rayon Rₑ du chemin de roulement de la bague extérieure en section droite et le diamètre D_{w} des billes est compris entre 0,51 et 0,55 limites comprises.

5. Dispositif selon l'une quelconque des revendications précédentes, **caractérisé par le fait que** le rapport entre le rayon Rᵢ du chemin de roulement de la bague intérieure en section droite et le diamètre D_{w} des billes est compris entre 0,51 et 0,55 limites comprises.

6. Dispositif selon l'une quelconque des revendications précédentes, **caractérisé par le fait que** la cage comprend deux parties annulaires assemblées par rivets et forme des alvéoles pour loger les billes, au moins deux rivets étant prévus entre deux alvéoles consécutifs.

7. Dispositif selon la revendication 6, **caractérisé par le fait que** chaque alvéole reçoit une bille.

8. Dispositif selon l'une quelconque des revendications précédentes, **caractérisé par le fait qu'**une des billes est réalisée en céramique.

9. Dispositif selon l'une quelconque des revendications précédentes, **caractérisé par le fait que** les valeurs de diamètre extérieur du roulement, de l'alésage du roulement, et de largeur du roulement sont identiques à celles d'un roulement rigide à une rangée de billes conventionnel de la gamme normalisée ISO.

## Claims

1. Rigid rolling bearing device with one row of balls, comprising an outer ring (11) provided with an outer surface and with a bore on which a toroidal inner raceway (14) is formed, an inner ring (15) provided with a bore and with a cylindrical outer surface on which a toroidal outer raceway (18) is formed, a row of balls (19) positioned between the two raceways, and a cage able to maintain a uniform circumferential spacing between the balls, **characterized in that** the diameter of the balls D_{w} is equal to the product of half the difference between the outside diameter D of the outer ring and the diameter d of the bore of the inner ring multiplied by a factor K of between 0.45 and 0.5 inclusive.

2. Device according to Claim 1, **characterized in that** the number Z of balls is equal to the integer nearest to the ratio between the product of the mean diameter Dₘ multiplied by Π to the product of the diameter D_{w} of the balls multiplied by a factor K1 of between 2.3 and 2.4 inclusive.

3. Device according to Claim 1, **characterized in that** the number Z of balls is equal to the lower odd integer closest to the ratio between the product of the mean diameter Dₘ times Π to the product of the diameter D_{w} of the balls multiplied by a factor K1 of between 2.3 and 2.4 inclusive.

4. Device according to any one of the preceding claims, **characterized in that** the ratio between the radius Rₑ of the raceway of the outer ring in cross section and the diameter D_{w} of the balls is between 0.51 and 0.55 inclusive.

5. Device according to any one of the preceding claims, **characterized in that** the ratio between the radius Rᵢ of the raceway of the inner ring in cross section and the diameter D_{w} of the balls is between 0.51 and 0.55 inclusive.

6. Device according to any one of the preceding claims, **characterized in that** the cage comprises two annular parts assembled by rivets and forms cells to hold the balls, at least two rivets being provided between two consecutive cells.

7. Device according to Claim 6, **characterized in that** each cell accommodates one ball.

8. Device according to any one of the preceding claims, **characterized in that** one of the balls is made of ceramic.

9. Device according to any one of the preceding claims, **characterized in that** the values of the outside diameter of the rolling bearing, of the bore of the rolling bearing, and of the width of the rolling bearing are identical to those of a conventional rigid single-row ball bearing in the standardized ISO range.

## Patentansprüche

1. Starre Wälzlagervorrichtung mit einer Reihe von Kugeln, die einen Außenring (11), der mit einer Außenfläche und einer Bohrung versehen ist, an der eine ringförmige innere Laufbahn (14) ausgebildet ist, einen Innenring (15), der mit einer Bohrung und einer zylindrischen Außenfläche versehen ist, an der eine ringförmige äußere Laufbahn (18) ausgebildet ist, eine Reihe von Kugeln (19), die zwischen den beiden Laufbahnen angeordnet sind, und einen Käfig, der zwischen den Kugeln einen gleichmäßigen Umfangsabstand halten kann, umfasst, **dadurch gekennzeichnet, dass** der Durchmesser D_{w} der Kugeln gleich dem Produkt aus der halben Differenz zwischen dem Außendurchmesser D des Außenrings und dem Bohrungsdurchmesser d des Innenrings und einem Koeffizienten K, der zwischen einschließlich 0,45 und 0,5 liegt, ist. ,

2. Vorrichtung nach Anspruch 1, **dadurch gekennzeichnet, dass** die Anzahl Z von Kugeln gleich der ganzen Zahl ist, die am nächsten zu dem Verhältnis von dem Produkt aus dem mittleren Durchmesser Dₘ und Π zu dem Produkt aus dem Durchmesser D_{w} der Kugeln und einem Koeffizienten K1 liegt, der zwischen einschließlich 2,3 und 2,4 liegt.

3. Vorrichtung nach Anspruch 1, **dadurch gekennzeichnet, dass** die Anzahl Z von Kugeln gleich der niedrigeren ungeraden ganzen Zahl ist, die am nächsten zu dem Verhältnis von dem Produkt des mittleren Durchmessers Dₘ und Π zu dem Produkt des Durchmessers D_{w} der. Kugeln und einem Koeffizienten K1 liegt, der zwischen einschließlich 2,3 und 2,4 liegt.

4. Vorrichtung nach einem der vorhergehenden Ansprüche, **dadurch gekennzeichnet, dass** das Verhältnis von dem Radius Rₑ der Laufbahn des Außenrings im Querschnitt zu dem Durchmesser D_{w} der Kugeln zwischen einschließlich 0,51 und 0,55 liegt.

5. Vorrichtung nach einem der vorhergehenden Ansprüche, **dadurch gekennzeichnet, dass** das Verhältnis von dem Radius Rᵢ der Laufbahn des Innenrings im Querschnitt zu dem Durchmesser D_{w} der Kugeln zwischen einschließlich 0,51 und 0,55 liegt.

6. Vorrichtung nach einem der vorhergehenden Ansprüche, **dadurch gekennzeichnet, dass** der Käfig zwei ringförmige Teile enthält, die durch Nieten zusammengefügt sind, und Zellen zur Aufnahme der Kugeln bildet, wobei mindestens zwei Nieten zwischen zwei aufeinander folgenden Zellen vorgesehen sind.

7. Vorrichtung nach Anspruch 6, **dadurch gekennzeichnet, dass** jede Zelle eine Kugel aufnimmt.

8. Vorrichtung nach einem der vorhergehenden Ansprüche, **dadurch gekennzeichnet, dass** eine der Kugeln aus Keramik hergestellt ist.

9. Vorrichtung nach einem der vorhergehenden Ansprüche, **dadurch gekennzeichnet, dass** die Werte des Außendurchmessers des Wälzlagers, der Bohrung des Wälzlagers und der Breite des Wälzlagers mit jenen eines herkömmlichen starren einreihigen Wälzlagers im standardisierten ISO-Bereich identisch sind.
